# EUROPEAN PATENT APPLICATION

(11) **EP 2 560 170 A1**
(43) Date of publication of application: **20.02.2013**
(21) Application number: 11177568.0
(22) Date of filing: 15.08.2011
(51) Int. Cl.: G11B 27/034

(54) **Variable audiovisual content for patient distraction**

(71) Applicant: Koninklijke Philips Electronics N.V., 5621 BA Eindhoven (NL)
(72) Inventor: Gillies, Murray Fulton, 5600 AE Eindhoven (NL); Vogt, Jürgen, 5600 AE Eindhoven (NL); Behere, Sachin, 5600 AE Eindhoven (NL); Tijs, Tim Johannes Willem, 5600 AE Eindhoven (NL)
(74) Representative: Damen, Daniel Martijn

(57) **Abstract**

The invention relates to a system (102) for providing an ambient healing environment to a patient during a medical procedure. The system comprises a display (104) for displaying a primary set (124) of visual data and at least three secondary sets (108, 110, 112, 114, 116, 118, 120, 122) of visual data to a patient, wherein the display is arranged for transiting between any of said at least three secondary sets (108, 110, 112, 114, 116, 118, 120, 122) of visual data via displaying the primary set of visual data. The invention thereby eases the transition between secondary sets (108, 110, 112, 114, 116, 118, 120, 122) of visual data, thereby preventing the patient from being confused and thus effectively reducing the patient's stress level.

## Description

### FIELD OF THE INVENTION

The invention relates to a system for providing an ambient healing environment.

### BACKGROUND OF THE INVENTION

State of the art systems for providing an ambient healing environment as to reduce a patient's stress level are typically arranged for displaying a movie to a patient. Several medical procedures take significant time. In order to span the whole procedure multiple movies are being displayed by such systems. Since these movies often contain nature scenes filmed in different regions of the world, the contextual transitions between these movies is rather abrupt. Such contextual transitions limit the stress reducing potential of state of the art systems as these transitions may be experienced in a negative way.

### SUMMARY OF THE INVENTION

It is an object of the invention to provide for a system for providing an ambient healing environment capable of more effectively reducing a patient's stress level.

This object is achieved by the system according to the invention, which system comprises a display for displaying a primary set of visual data and at least three secondary sets of visual data to a patient, wherein the display is arranged for transiting between said at least three secondary sets of visual data via displaying the primary set of visual data.

By transiting between any secondary sets of visual data via displaying the primary set of visual data, said secondary sets are linked together in a logical way thereby embedding otherwise unrelated visual data fragments within some overarching theme. As a result the transition from one secondary set of visual data to another secondary set of visual data is less abrupt. This prevents patients from being confused by the visual data displayed. As a result the system according to the invention is capable of more effectively reducing a person's stress level.

The invention allows for application in hospital settings, particularly before and/or during medical procedures that induce significant stress levels to patients. Examples of application are in are emergency rooms, labor rooms, PET-CT uptake rooms and MRI rooms. During MRI examination patients are situated in a narrow bore of an MRI scanner and exposed to severe noise produced by said scanner. As a result patients experience considerable stress which negatively impacts imaging quality as it causes motion artifacts. Such stress is therefore to be reduced as much as possible. For the purpose of PET-CT imaging, a contrast agent comprising radioactively labeled sugar is intravenously administered to a patient. Since the uptake of said sugar by the human body is essentially non-specific, the tracer will gather at any location in the body where said sugar is consumed. Therefore the patient is required to remain as relaxed as possible during and after administering in order to minimize the amount of sugar consumed by the brain. Significant stress is however induced by the injection, by the confined geometry of the CT scanner in which the patient is to take place and by the fact that the patient is made aware that he should relax nonetheless. Therefore both MRI and PET-CT imaging may largely benefit from the system according to the invention.

A preferred embodiment of the system according to the invention comprises a user interface for entering a patient's preference regarding the secondary sets of visual data, wherein the system is arranged for adapting the displaying of said secondary sets of visual data in response to said patient's preference. This embodiment enables the patient to control the process via which visual data is being displayed to him or her. Absence of control over the environment is a major contribution to a patient's stress level during medical procedures. This embodiment effectively increases the patient's perception of being in control during the medical procedure. Therefore this embodiment is advantageous in that it further reduces the patient's stress level.

In a further preferred embodiment of the system according to the invention, the user interface comprises a touch screen, and wherein the user interface is configured for displaying graphical representations of the secondary sets of visual data. This embodiment enables the patient to express his preferences in a convenient manner thereby advantageously further reducing the patient's stress level.

In a further preferred embodiment of the system according to the invention, the system is arranged for clustering the secondary sets of visual data according to content themes, and wherein the system is arranged for displaying a unique cluster of secondary sets of visual data according to the patient's preference. On the one hand this embodiment allows the patient to exert control over the content being displayed by excluding from displaying any secondary set of visual data not in the content theme matching the patient's preference. On the other hand this embodiment enables spanning a lengthy medical procedure by displaying multiple sets of secondary visual data within the content theme. Consequently this embodiment has the advantage of further reducing the patient's stress level.

In a further preferred embodiment of the system according to the invention, the system is arranged for displaying the secondary sets of visual data in an order according to the patient's preference. This embodiment enables the patient to control the process of displaying secondary sets of visual data without compromising the length of time the secondary sets can cover as all secondary sets of visual data will potentially be displayed. As a result this embodiment is advantageously capable of further reducing the patient's stress level.

In a further preferred embodiment of the system according to the invention, the system is arranged for displaying the secondary sets of visual data in a sequence wherein the secondary set of visual data most preferred is displayed both first of the sequence and last of the sequence. In this way the sequence of secondary sets of visual data is both started and closed with the most preferred secondary set. As a result the most preferred secondary set of visual data is determining for the patient's memory forming of the medical procedure. Therefore this embodiment is advantageous in that it increases patient satisfaction.

In a further preferred embodiment of the system according to the invention, the secondary sets of visual data are secondary movies having variable frame rates, and the system is arranged for increasing a variable frame rate associated with a secondary movie reversely proportional to the patient's preference. This embodiment enables displaying more relevant secondary movies, i.e. secondary movies that more resemble the patient's preference, at a lower frame rate than less relevant secondary movies. This embodiment thus realizes that the patient experiences during a relatively long period of time secondary movies that match his or her preference thereby increasing the perception of being in control, however, without compromising the duration of the medical procedure that the secondary movies are able to cover. Therefore this embodiment has the advantage of further reducing the patient's stress level.

In a further preferred embodiment of the system according to the invention, the secondary sets of visual data secondary series of time lapse photography frames separated by variable time periods, and the system is arranged for increasing a variable time period associated with a secondary series of time lapse photography frames proportional to the patient's preference. This embodiment enables increasing said variable time periods for more preferred secondary series of time lapse photography frames and decreasing these variable time periods for less preferred ones. As a result, this embodiment brings about that the patient experiences during a longer period those secondary series of time lapse photography frames that match his or her preference. However, this does not result in reducing the duration of the medical procedure these secondary series are able to cover. As a result this embodiment is advantageous in that further reduces a patient's stress level.

In a further preferred embodiment of the system according to the invention, the secondary sets of visual data are secondary series of time lapse photography frames having variable time periods for holding, and the system is arranged for increasing a variable time period for holding associated with a secondary series of time lapse photography frames proportional to the patient's preference. This embodiment realizes increasing said variable time periods for holding for more preferred secondary series of time lapse photography frames and decreasing these variable time periods for holding for less preferred ones. Hence this embodiment allows the patient to experiences during a longer period those secondary series of time lapse photography frames that are in accordance with his or her preference. This quality does not cause a reduction of the duration of the medical procedure these secondary series can span. Consequently this embodiment advantageously further reduces a patient's stress level.

In a practical embodiment of the system according to the invention, the primary set of visual data is a primary image.

In a further practical embodiment of the system according to the invention, the primary set of visual data is a primary movie.

In a further practical embodiment of the system according to the invention, the primary set of visual data is a primary series of time lapse photography frames.

In a further practical embodiment of the system according to the invention, the primary set of visual data comprises audio data.

In a practical embodiment of the system according to the invention, the secondary sets of visual data are secondary images.

In a further practical embodiment of the system according to the invention, the secondary sets of visual data are secondary movies.

In a further practical embodiment of the system according to the invention, the secondary sets of visual data are secondary series of time lapse photography frames. In a further practical embodiment of the system according to the invention, the secondary sets of visual data comprise audio data.

### SHORT DESCRIPTION OF THE FIGURES

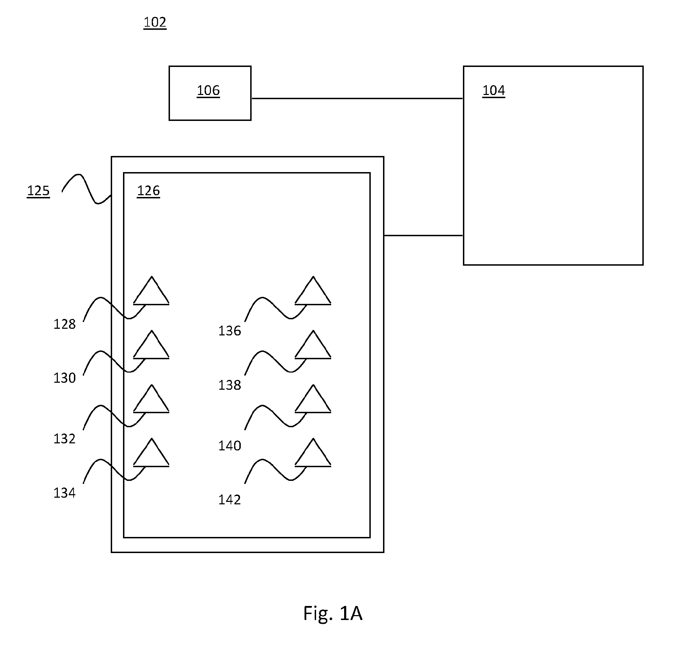

Fig. 1A schematically discloses a system according to the invention provided with a user interface and a touch screen.

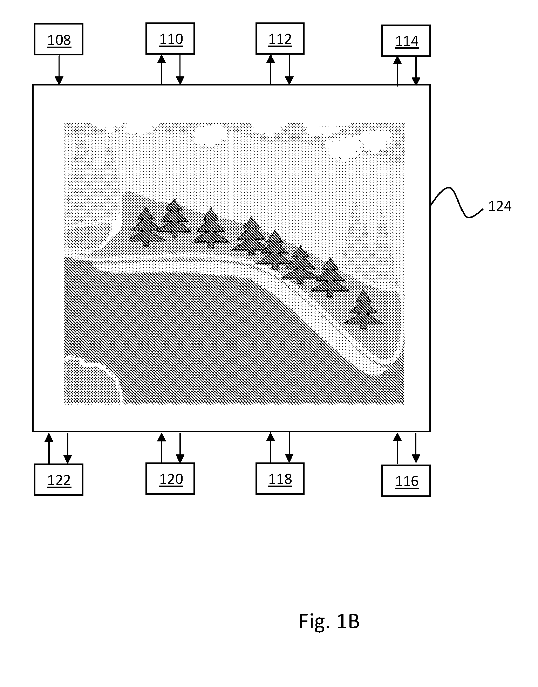

Fig. 1B schematically depicts the process via which the system according to the invention transits from a secondary set of visual data to another secondary set of visual data.

### DETAILED DESCRIPTION OF THE EMBODIMENTS

Figure 1A schematically depicts a system 102 for providing an ambient healing environment. The system 102 comprises a display 104 for displaying said primary set of visual data and said secondary sets of visual data to a patient, wherein the display is arranged for transiting between any secondary sets of visual data via displaying the primary set of visual data. The system 102 may comprise a storage 106 known per se, e.g. a server, for storing a primary set of visual data and at least three secondary sets of visual data.

Figure 1B schematically the depicts process via which the display 104 during use transits between any secondary sets of visual data, which in this specific example are secondary movies 108, 110, 112, 114, 116, 118, 120 and 122, via displaying the primary set of visual data which in this particular example is a primary image 124. In this particular case, said secondary movies depict (i) clouds in the sky, (ii) a desert, (iii) mountains, (iv) a jungle, (v) flowers growing, (vi) a beach, (vii) an ocean and (viii) an island, respectively.

During use, after displaying secondary movie 108 depicting clouds in the sky, the primary image 124 is displayed. In this specific example said primary image 124 displays part of the globe and thereby graphically interconnects secondary movie 108 and secondary movie 110 depicting a jungle. After displaying the primary image 124 for some time, e.g. 10 seconds, secondary movie 110 is displayed by the system 102 via the display 104. Likewise, after having displayed secondary movie 110, display 104 displays primary image 124 once more. As a result the system 102 links secondary movie 112, showing mountains, in a logical way to secondary movies 108 and 110. Via primary image 124 the otherwise unrelated secondary movies 108 up to 122 are embedded in an overarching theme i.e. a visual representation of planet earth. The transition from secondary movie 112 to secondary movie 114 again occurs via displaying primary image 124. Similarly the transitions from secondary movies 114 to 116, 116 to 118, 118 to 120 and 120 to 122 all occur via displaying primary image 124.

Referring to figure 1A, in this particular example the system 102 furthermore comprises a user interface 125 for entering a patient's preference regarding the secondary sets of visual data. For that purpose, this specific embodiment comprises a touch screen 126. Furthermore user interface 125 is configured for displaying graphical representations 128, 130, 132, 134, 136, 138, 140 and 142 of secondary movie 108 up to and including secondary movie 122, respectively, as to enable the patient to express his preference.

In this specific example the system 102 arranged for clustering the secondary sets of visual data according to content themes. For example, the secondary movies 118, 120 and 122, respectively displaying a beach, an ocean and an island, may be clustered in the content theme "sea world". Furthermore, the system is arranged for displaying a unique cluster of secondary sets of visual data according to the patient's preference. For instance, if the patient indicates that the content theme "sea world" matches his preference, the system 102 will display only secondary movies 118, 120 and 122 in an interleaved way with the primary image 124; the system 102 will omit displaying secondary movie 108 up to and including secondary movie 116.

Alternatively, the system 102 is arranged for displaying the secondary sets of visual data in an order according to the patient's preference. Herein patient determines said via selecting the graphical representations 128 to 142 for secondary movies 108 to 122 at the touch screen 126 of the user interface 125 determines the order according which the system 102 displays the secondary movies 108 up to and including 122 via the display 104. In this specific embodiment, the system 102 is arranged for displaying the secondary sets of visual data in a sequence wherein the secondary set of visual data most preferred is displayed both first of the sequence and last of the sequence. Hence, the system 102 starts the sequence of secondary movies with secondary movie 108 and complements this sequence with said secondary movie 108.

In all of above examples, the primary set of visual data may equally well be a primary movie or a primary series of time lapse photography frames. Similarly the secondary sets of visual data may equally well be secondary images or secondary series of time lapse photography frames. Alternatively the secondary sets of visual data may be a mixture of secondary movies, secondary images and secondary series of time lapse photography frames. Furthermore, the primary set of visual data and some or all secondary sets of visual data may comprise audio data.

In this particular embodiment the secondary movies have variable frame rates and the system 102 is arranged for increasing a variable frame rate associated with a secondary movie reversely proportional to the patient's preference. Said patient's preference is for example derived by the system 102 from the order according which the patient presses the graphical representations 128 to 142 at the touch screen 126. Based on said preference, the secondary movie most preferred is displayed by the system 102 at the lowest frame rate, the secondary movie most preferred but one is displayed at the lowest frame rate but one, and so on, such that ultimately the secondary movie least preferred is displayed at the highest frame rate.

Alternatively, the secondary sets of visual data are secondary series of time lapse photography frames separated by variable time periods and the system 102 is arranged for increasing a variable time period associated with a secondary series of time lapse photography frames proportional to the patient's preference. Based on that preference, the system 102 will display the secondary series of time lapse photography frames most preferred with the longest variable time period, the secondary movie most preferred but one is displayed with the longest variable time period but one, and so on, such that the secondary movie least preferred is displayed at the shortest variable time period.

Alternatively, the secondary sets of visual data are secondary series of time lapse photography frames having variable time periods for holding and the system 102 is arranged for increasing a variable time period for holding associated with a secondary series of time lapse photography frames proportional to the patient's preference. The system 102 can for instance record such preference by registering the order of pressing the graphical representations 128 to 142 at the touch screen 126. On the basis of this preference, the system 102 will display the secondary series of time lapse photography frames most preferred with the longest variable time period, the secondary movie most preferred but one is displayed with the longest variable time period but one, and so on, such that the secondary movie least preferred is displayed at the shortest variable time period.

While the invention has been illustrated and described in detail in the drawings and in the foregoing description, the illustrations and the description are to be considered illustrative or exemplary and not restrictive. For example, the primary set of visual data and the secondary sets of visual data alike may be any kind of visual data, possibly comprising audio data, capable of inducing a somehow relaxing effect. The invention is not limited to the disclosed embodiments. Other combinations of embodiments are feasible. It is noted that the system according to the invention and all its components can be made by applying processes and materials known per se. In the set of claims and the description the word "comprising" does not exclude other elements and the indefinite article "a" or "an" does not exclude a plurality. Any reference signs in the claims should not be construed as limiting the scope. It is further noted that all possible combinations of features as defined in the set of claims are part of the invention.

## Claims

1. A system (102) for providing an ambient healing environment, comprising a display (104) for displaying a primary set (124) of visual data and at least three secondary sets (108, 110, 112, 114, 116, 118, 120, 122) of visual data to a patient, wherein the display is arranged for transiting between any of said at least three secondary sets of visual data via displaying the primary set of visual data.

2. The system according to claim 1, comprising a user interface (125) for entering a patient's preference regarding the secondary sets of visual data, wherein the system is arranged for adapting the displaying of said secondary sets of visual data in response to said patient's preference.

3. The system according to claim 2 wherein the user interface (125) comprises a touch screen (126), and wherein the user interface is configured for displaying graphical representations (128, 130, 132, 134, 136, 138, 140, 142) of the secondary sets of visual data.

4. The system according to claim 2, wherein the system (102) is arranged for clustering the secondary sets of visual data according to content themes, and wherein the system is arranged for displaying a unique cluster of secondary sets of visual data according to the patient's preference.

5. The system according to claim 2, wherein the system (102) is arranged for displaying the secondary sets of visual data in an order according to the patient's preference.

6. The system according to claim 2, wherein the system (102) is arranged for displaying the secondary sets of visual data in a sequence wherein the secondary set of visual data most preferred is displayed both first of the sequence and last of the sequence.

7. The system according to claim 5, wherein the secondary sets of visual data are secondary movies having variable frame rates, and wherein the system is arranged for increasing a variable frame rate associated with a secondary movie reversely proportional to the patient's preference.

8. The system according to claim 5, wherein the secondary sets of visual data secondary series of time lapse photography frames separated by variable time periods, and wherein the system is arranged for increasing a variable time period associated with a secondary series of time lapse photography frames proportional to the patient's preference.

9. The system according to claim 5, wherein the secondary sets of visual data are secondary series of time lapse photography frames having variable time periods for holding, and wherein the system is arranged for increasing a variable time period for holding associated with a secondary series of time lapse photography frames proportional to the patient's preference.

10. The system according to claim 1 wherein the primary set of visual data is a primary image.

11. The system according to claim 1 wherein the primary set of visual data is a primary movie.

12. The system according to claim 1 wherein the primary set of visual data is a primary series of time lapse photography frames.

13. The system according to claim 1 wherein the primary set of visual data comprises audio data.

14. The system according to claim 1 wherein the secondary sets of visual data are secondary images.

15. The system according to claim 1 wherein the secondary sets of visual data are secondary movies.

16. The system according to claim 1 wherein the secondary sets of visual data are secondary series of time lapse photography frames.

17. The system according to claim 1 wherein the secondary sets of visual data comprises audio data.
